Europäisches Patentamt

European Patent Office

Office européen des brevets

(11) Publication number: 0 354 604 A2

# EUROPEAN PATENT APPLICATION

(21) Application number: 89201744.3

(51) Int. Cl.⁴: G01N 27/416

(22) Date of filing: 29.06.89

(30) Priority: 08.07.88 IT 2129288

(43) Date of publication of application:
14.02.90 Bulletin 90/07

(84) Designated Contracting States:
AT BE CH DE ES FR GB LI NL SE

(71) Applicant: INSTRUMENTATION LABORATORY S.p.A.
Viale Monza, 338
I-20128 Milano(IT)

(72) Inventor: Calzi, Claudio
Via Martiri Oscuri, 21
I-20125 Milano(IT)
Inventor: Premoli, Pietro
Via San Lorenzo, 19
Andotno Micca (Vercelli)(IT)

(74) Representative: Faraggiana, Vittorio, Dr. Ing.
Ingg. Guzzi e Ravizza S.r.l. Via Boccaccio, 24
I-20123 Milano(IT)

(54) System for measuring the partial pressure of carbon dioxide in liquid samples, particularly in biological samples.

(57) A system is disclosed for measuring the partial pressure of a gas, and in particular of carbon dioxide (p CO ). The system uses an electrolytic solution of weak ionic strenght which is circulated between an ion-selective electrode and a membrane permeable to gases but not to the ions and substantially distant from the electrode. The partial pressure of the gas is measured after a fraction of the electrolytic solution has been permeated by the gas present in the sample and subsequently has been transferred on the sensible portion of the electrode.

Fig.2

EP 0 354 604 A2

# SYSTEM FOR MEASURING THE PARTIAL PRESSURE OF CARBON DIOXIDE IN LIQUID SAMPLES, PARTICULARLY IN BIOLOGICAL SAMPLES

This invention relates to the field of chemical analyzers. More particularly, the invention relates to the group of chemical analyzers which uses electrochemical sensors of the ion-selective electrode type.

Most of the systems for measuring $pCO_2$ in a liquid sample are based on the Severinghaus electrode, specifically known as the $CO_2$ electrode.

In this type of device, a filament immersed in a predetermined constant electrolyte and enclosed in glass (known as the pH electrode) measures the pH in relation to another reference electrode, which is also immersed in a like electrolytic solution. This latter solution is however in contact with the liquid sample by way of a membrane which is permeable to $CO_2$ but not to the electrolytes. The $CO_2$ present in the sample therefore diffuses into the electrolytic solution situated about the reference filament to alter its pH, which is recorded as the difference in electrical potential between it and the pH electrode enclosed in the $CO_2$-impermeable glass.

As the $pCO_2$ of the sample, and therefore that which diffuses into the electrode, is proportional to the pH variation, this latter after suitable calibration indirectly provides a quantitative evaluation of the $pCO_2$ of the sample.

For the system to operate, the electrodes (both the glass-enclosed pH electrode and the reference electrode) must be immersed in an electrolytic solution of weak ionic strength, such that the pH varies substantially in accordance with the $CO_2$ dissolved therein. The electrode constructed in this manner and its electrolyte come into contact with the liquid sample (eg. blood) by way of a thin membrane (teflon, silicone or the like) permeable to gaseous $CO_2$ but not to the electrolytes.

The membranes used for these electrodes define the physical confines for the electrolyte during the measurement reaction. The quantity of gas ($CO_2$) which passes through the membrane in a determined time is directly proportional to the effective membrane diffusion area (of the pores) and inversely proportional to its thickness.

It is therefore apparent that to obtain an acceptable sensitivity and a sufficiently short response time, the membrane and reaction electrolyte thicknesses must be small, and in effect are usually between $10^{-7}$ and $10^{-4}$ cm. In practice this means that the membranes are located on their respective sensors under considerable mechanical tension.

Such sensors are chronically afflicted by the following problems:
- rapid membrane ageing, with loss of elasticity characteristics;
- electrolyte alteration in terms of variation in concentration and/or insufficient self-replacement.

In some arrangements based on this principle, use has been made of the flow cell system. In this type of apparatus the electrode, the electrolyte and the membrane are in contact with a flow cell. The sample solution to be analyzed is then introduced into the same flow cell.

It must be noted that although the electrode is not used for measuring $pCO_2$, there is still continuous passage of $CO_2$ from the sample solution to the reference solution which is in contact with the electrode and vice versa (the $pCO_2$ being different in the two systems).

To obviate the reading errors which would arise if the sample $pCO_2$ was measured immediately after replacing the internal reference solution of the flow cell, USA patent 4,490,234 for example describes a system in which the electrolytic reference bath is constantly removed using a pump of capacity greater than that required to remove the entire $CO_2$ which diffuses from the reference solution.

The reading is taken immediately after stopping the electrolyte circulation through the electrode, given that only at that moment can the $CO_2$ diffuse, so altering the solution pH.

The main object of the present invention is to replace the present sensors with others which by virtue of their constructional characteristics and their method of operation can provide a high level of reliability and can be considered as a fixed component of the apparatus, such as to require only periodic maintenance at intervals of the order of some months.

The present invention provides an electrochemical approach to $pCO_2$ measurement. Its basic chemical and physical principles are not substantially different from those of previous methods, however its method of execution is radically different.

The invention provides for the use of a membrane which instead of being in intimate contact with the sensor is situated in a zone of the cell which lies upstream of the electrochemical sensor, without any mechanical stress being present and therefore without the consequent stress problems of current systems arising.

On that side of the membrane not in contact with the sample, a reagent is circulated (and therefore renewed), its physico-chemical characteristics changing as a result of $CO_2$ permeation. On termination of its exposure to the sample, the reagent is removed and introduced into that part of the apparatus in which the sensor is located for measuring the modified physico-chemical characteristic. These latter sensors are therefore never in contact with the sample, but only with the auxiliary reagent which is of known composition.

Thus the sensor, being in a "sealed" environment, has an average life which can be predicted with reasonable accuracy and reliability.

This procedure can be used to measure various analytes by suitably modifying the membrane and electrode characteristics.

The main characteristics of the invention will be more apparent from the description of one embodiment thereof given hereinafter by way of example with reference to the accompanying drawings in which:

Figure 1 is a detailed view of the cell using the permeable membrane in the system according to the invention;

Figure 2 is a diagrammatic representation of the manner in which the cell of Figure 1 is used in a fluid system for circulating the solutions to be measured;

Figures 3 and 4 are qualitative diagrams of values measured by the system of Figure 1.

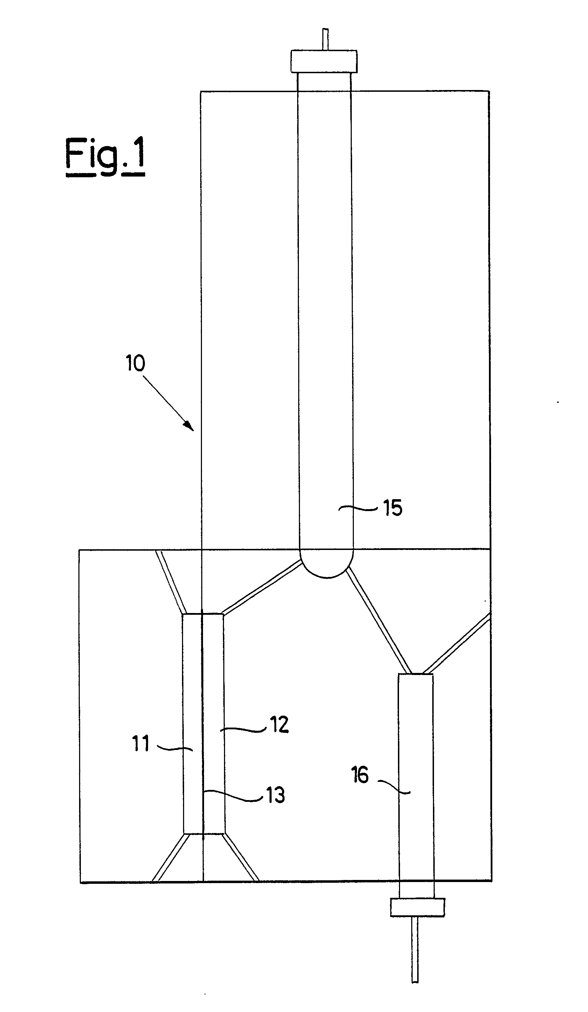

As shown in Figure 1, the reference numeral 10 indicates overall a body in which the fluid path is formed, and preferably such as to enable perfectly planar and possibly transparent surfaces to be obtained. Of all types of transparent plastics material which can be used, perspex is preferred. In the body 10 there is formed a chamber 11 facing a chamber 12 through the membrane 13. From the chamber 12 the fluid can pass through a pH electrode 15 and then through a reference electrode 16.

Various types of $CO_2$-permeable membranes can be used. Gore-Tex and Silicone have proved to be the most suitable materials for forming the membrane, particularly by virtue of their permeation level. In particular, a silicone membrane is preferred with a thickness of 45 $\mu$m, which also has the property of ensuring a perfect liquid seal between the mutually facing parts by compressing the membrane edges.

The pH electrode can have a glass or plastics membrane of flat or bulb shape. Satisfactory results are obtained using a flat plastics membrane.

The reference electrode can be a calomel/saturated KCl, Ag AgCl/saturated KCl, or simply an Ag AgCl electrode of the type normally used for chloride determination.

The fluid path is preferably such as to provide the maximum exchange surface.

It is advantageous for the path between the end point of the permeation surface, ie the half chamber 12, and the head of the pH electrode 15 to be kept as short as possible.

In the direct $CO_2$ measurement system an electrolyte solution can be used which is obtained by combining sodium carbonate and sodium bicarbonate, to obtain a concentration of between 5 and 15 mmol/l. For example, a preferred formulation is a 6 mmol/l solution in which the sodium carbonate concentration is 2 mmol/l and the sodium bicarbonate concentration is 4 mmol/l, with the addition of 100 mmol/l of sodium chloride.

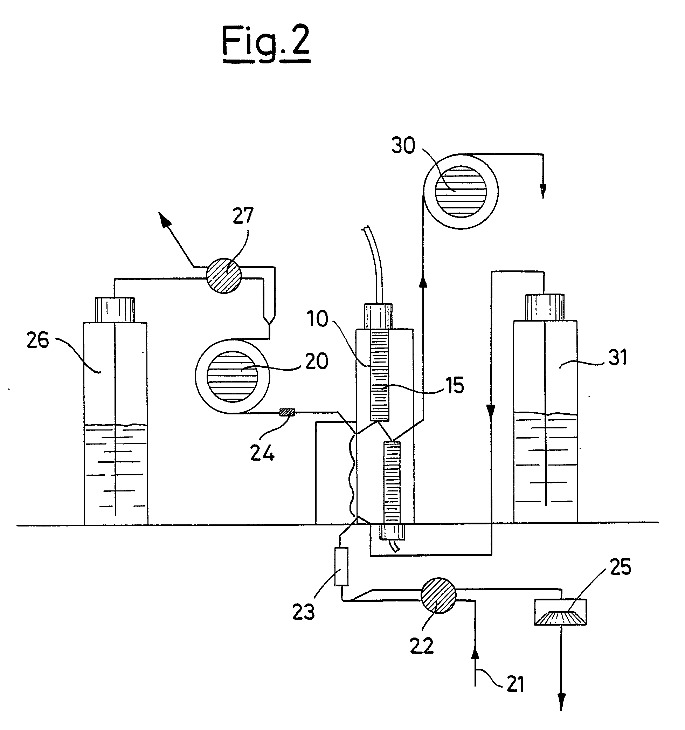

An example of the system operating cycle can be generally described with reference to Figure 2. By means of a peristaltic pump 20, a calibration solution can be drawn in from the inlet 21 selected by a solenoid valve 22. The calibration solution, preheated in 23, is drawn in until it reaches the liquid sensor 24.

During a static phase lasting from 5 to 15 seconds, the gaseous $CO_2$ contained in the calibration solution permeates towards the electrolyte contained in the fluid path separated by the membrane 13, through which the acceptor electrolyte circulates from the container 31. On termination of this stage, the acceptor electrolyte in which the pH variation has taken place is drawn through the pH electrode (and the reference electrode) by means of the peristaltic pump 30. This stage lasts 5-15 seconds and takes place at low flow rate. The mV signal indicating the difference between the electrolyte pH before and after gaseous $CO_2$ permeation is obtained simultaneously.

In accordance with the normal method for this type of measurement, wash stages are then carried out in which the electrolyte in the acceptor line is replaced and the sample line or calibration solution line emptied by drawing in wash fluid from 26, by simultaneously operating the peristaltic pumps 20 and 30. The pipe connected to the pump 20 is switched over between the container 26 and an air evacuation exit 28 by the valve 27, according to the pumping direction of 20.

Calibration is carried out for two points to determine a straight line in a diagram of the type shown in Figure 3 by way of example only, in which the vertical axis represents the read mV values and the horizontal axis represents the $pCO_2$ values, these falling on a straight line.

Figure 4 shows by way of example tha acquisition diagram for $pCO_2$ in which the horizontal axis represents time in seconds and the vertical axis represents the read mV values. The maximum value is read from the curve.

Having effected the calibration, the values for a sample are read by a substantially identical cycle to that used for the standard calibration solution.

The valve 22 is switched over to draw in the sample at 25 by the action of the pump 20, to then repeat the described measurement cycle.

The mV value is uniquely related to the corresponding pCO₂ value by the straight calibration line which has been previously constructed.


## Claims

1. A method for determining a substance in a liquid sample, said method using a membrane permeable to one or more types of chemical substance but not to others, said membrane being interposed between two circulation paths of two solutions, one of which is the sample and the other is a known solution, the method comprising the following stages:

   a) bringing the sample solution into contact with a known solution by way of the membrane;

   b) halting circulation of the solutions;

   c) bringing the known solution into contact with a sensor for measuring a value related to the concentration of the chemical substance in the solution;

   d) measuring the concentration of the substance to be determined.

2. The method claimed in claim 1, characterized in that the sensor performs the measurement while the solution flows slowly by it.

3. The method claimed in claim 1, wherein the substance to be determined is CO₂.

4. The method as claimed in claim 3, wherein the sensor is a pH measurer.

5. The method claimed in any one of the preceding claims, wherein the known solution contains the bicarbonate ion.

6. The method claimed in any one of the preceding claims, wherein the known solution contains the carbonate ion.

7. The method claimed in claim 5 or 6, wherein the solution also contains sodium chloride.

8. The method claimed in claims 5 and 6, wherein the bicarbonate and carbonate salts are of sodium.

9. The method claimed in any one of the preceding claims, wherein the known solution is moved towards the sensor after the substance to be determined has diffused into said solution through the membrane.

10. The method claimed in any one of the preceding claims, wherein the solutions follow a sinuous path at the point at which they are brought into contact with the membrane.

11. An apparatus for implementing the determination method claimed in one or more of the preceding claims, composed of a unit in which a first path is provided for the solution containing the substance to be determined, and forming a first half cell separated by a membrane permeable to said solution from a second half cell to which the known solution is fed and which communicates by a duct with a path zone in which the solution is in contact with at least one sensor.

12. An apparatus as claimed in claim 11, characterized in that said duct proceeds towards a further reference sensor.

13. An apparatus as claimed in the preceding claims, characterized in that the unit and the ducts extending towards the sensors are formed in a single composite body.

14. An apparatus as claimed in the preceding claims, characterized in that the communication ducts between the second half cell and the sensor have a length substantially less than the length of the half cell.

Fig.1

# Fig.2